# EUROPEAN PATENT APPLICATION

(11) **EP 2 932 823 A1**
(43) Date of publication of application: **21.10.2015**
(21) Application number: 14165165.3
(22) Date of filing: 17.04.2014
(51) Int. Cl.: A01G 23/00, B66C 1/58

(54) **Material manipulating device, work vehicle and method**

(71) Applicant: John Deere Forestry OY, 33101 Tampere (FI)
(72) Inventor: Paakkunainen, Marko Tapani, 33820 Tampere (FI)
(74) Representative: Magin, Ludwig Bernhard

(57) **Abstract**

It is proposed a material manipulating device (24), preferably a grapple, adapted to be supported by a suspension (26), whereas the material manipulating device (24) is provided with at least one guide means (32) adapted to indicate the location of the material manipulating device (24) at least with respect to the material (19) to be manipulated, a work vehicle (10) comprising at least one such material manipulating device (24) and a method for operating such material manipulating device (24) or work vehicle (10) respectively.

## Description

The present invention refers to a material manipulating device, preferably a grapple, supported by a suspension, comprising at least one guide means adapted to indicate the location of the material handling device at least with respect to the material to be manipulated, a work vehicle comprising such material manipulating device and a method for operating such material manipulating device or work vehicle respectively.

Material manipulating devices such as grapples, shovels, buckets or others are used to manipulate or handle, for example grab, transfer, respectively lift and/or move material. Such material manipulating devices are usually mounted via a suspension to a preferably movable boom of a work vehicle like an excavator, a crane or a forwarder used to manipulate logs or other typically elongated material but may be used, too, in combination with a tractor, a grapple skidder or any other suitable forestry, agricultural, construction, transportation or general work vehicle respectively apparatus. Such material manipulating devices have to be brought close to the material to be manipulated respectively handled to allow the material manipulating device to handle the material in a secure manner, in particular grab the material in such a way to make sure that the material can be securely moved, lifted or otherwise handled, in particular making sure that the material manipulating device is grappling the material at or close too its center of gravity. Such may be difficult, cumbersome and tiring to an operator and in particular difficult to inexperienced operators or operators having limited or no three-dimensional eyesight.

US2005133115A1 shows a tree harvesting machine including a tree harvesting tool and being equipped with a tree position sensor operable to generate one or more tree position signals indicative of a position of a tree. An alignment device is provided on the machine and operates to generate a tree position signal indicative of the direction of the location of the tree with respect to a component of the tree harvesting machine. The sensor(s) respectively the alignment device is/are located on the machine and may require complex controls to position the tree harvesting tool or material handling device.
It is the object of the present invention to overcome such disadvantage(s).

This object is met according to the invention by the teaching of claim 1, 8 or 11 respectively, while features developing the solution in an advantageous way are set forth in the further claims.

The present invention provides a material manipulating device, preferably a grapple, supported by a suspension. Material manipulating devices may be shovels, tongs, harvesting heads, in particular tree harvesting heads, or other suitable devices. The material manipulating device is provided with at least one guide means adapted to indicate the location of the material manipulating device at least with respect to the material to be handled. The position with respect to the ground or other reference points may be provided, too. The indication assists an operator in a simple, cost-effective and reliable manner to determine if the material manipulating device is placed in a position suitable to manipulate or handle, for example grab and lift or otherwise move, material like logs, tubes, other single goods or even bulk material. The use of this invention is not limited to manipulating material lying on the ground; in forestry applications this invention could also be used to target a standing tree.

The guide means may provide a direct or indirect indication. I.e., it may for example emit light in form of a light beam or a laser beam which provides a directly visible indication like a light point or laser point on the ground respectively the material to be manipulated. However the guide means may emit other signals, like radiation or waves, for example ultrasonic waves which in addition may be reflected by the ground and/or the material to be manipulated.

The guide means may comprise at least one out of a light emitting device, preferably a laser pointer, an ultrasonic device or a plumbline. The use of other guide means is possible, for example different types of emitting devices may be used.

According to one aspect of the invention the guide means may be located in a central area of the material manipulating device and preferably form an elongation of a main axis of the material manipulating device that way simplifying the alignment, adjustment and/or positioning of the material manipulating device because it may not be necessary to do any correction to the indication provided by the guide means.

According to another aspect of the invention it may be provided a receiver means adapted to receive the indication and/or location information provided by the guide means or the indication respectively and preferably comprising at least one out of a camera, light detector or ultrasonic receiver. The use of other suitable receiver means is possible, for example it is possible to provide other detection/sensor devices. The receiver means may enhance the perceptibility of the indication, for example, the use of a camera may help to improve visibility if the material has to be picked up in a blind area. Other receiving means may detect non-visible indications or be adapted to provide additional information like material distance, direction or other.

The guide means and/or receiver means may be selectively activatable so that they may for example be deactivated if the material handling device is not in use, in between uses or if the material is already grabbed and an indication is not required for that moment. That may save energy as well as help to improve the life-span of the respective means.

By using a special shape of the beam, like a square or line, or more than one beam and using a control means, like. a computer it is not only possible to indicate the position of the material manipulating device with respect to the material, but also to find out, in which direction it should be rotated best to grip the material fast.

According to one aspect of the invention a work vehicle may be equipped with one or more manipulating devices according to the present invention. Such work vehicle may be a forwarder, for example a forwarder used in forestry to manipulate, lift, move and/or transport logs. The work vehicle may be any other suitable type of vehicle, for example an excavator, crane, skidder, a loader or tractor used in for example in construction, agriculture, forestry, transportation or material handling. Use of an inventive material manipulating device may not be limited to a vehicle though, it may be used in combination with manipulating devices/apparatus, for example used to move goods or material in or in and out of a storage and/or manufacturing area or hall.

The work vehicle may be provided with control means operatively connected to the guide means and/or the receiver means. Such control means may be control levers suitable to be manipulated by an operator or semi or fully automated controls which may be part or be operatively connected to an electronic control unit, the control means controlling and/or providing information to control movement of the material manipulating device.

The work vehicle may be provided with display means adapted to visualize material manipulating device location information provided by the receiver and or control means to an operator. Such display means may be a monitor and/or another instrument displaying an actual picture of the indication or providing information based on the indication provided by the guide means. The display means may provide additional information based on the indication, for example the distance or angular position of the material manipulating device with respect to the material and/or ground. Such display means may for example be located in the cabin or close to a remote control stand in case such a stand is provided at or close to the work vehicle.

A method to manipulate material by means of a material manipulating device or work vehicle according to the present invention may comprise the steps of activating the guide means if applicable, moving the material manipulating device towards the material to be manipulated, appropriately aligning the material manipulating device with respect to the material according to the indication provided by the guide means and manipulating the material respectively.

According to such method, material manipulating device alignment may be handled manually by an operator, semi-manually according to information provided by the control means or fully automated by means of the control means.

An embodiment of the invention described below is shown in the drawings, in which
- Fig. 1: is a rear view of a work vehicle comprising a material manipulating device and
- Fig. 2: is a more detailed depiction of a material manipulating device.

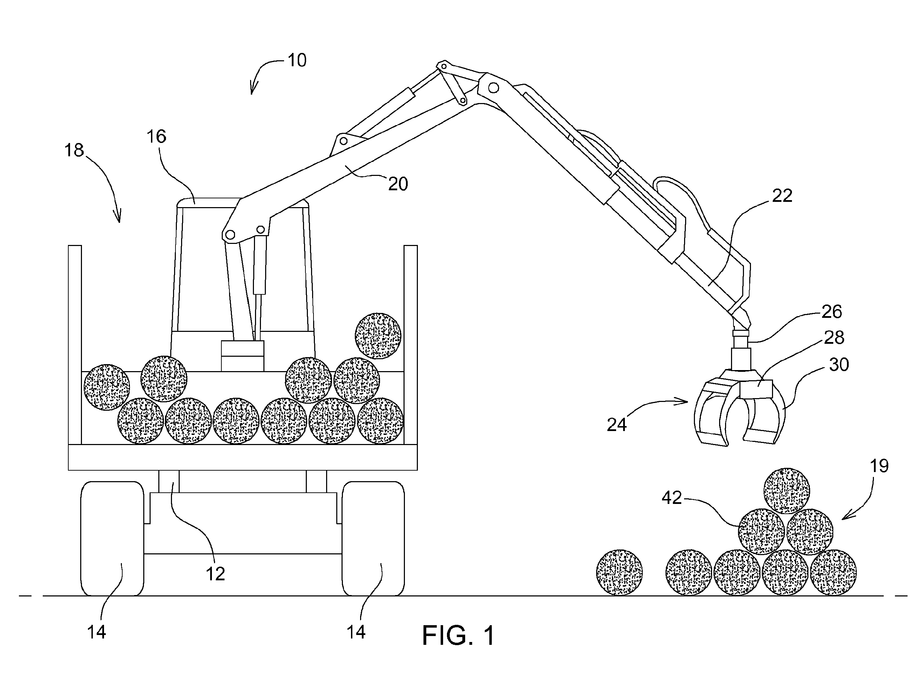

With reference to figure 1 it is shown a forwarder, in the following generally designated as a work vehicle 10, comprising a chassis 12 supported by a plurality of wheels 14, a cabin 16 housing among others an operators seat and control means (not shown) and providing protection to an operator. Even if only wheels 12 are shown, it is obvious that other support elements, e.g. tracks may be used to support the work vehicle 10 instead of wheels 14.

Furthermore the work vehicle 10 is provided with a load space 18 to hold and carry material 19. In case of a forestry forwarder the material 19 may mainly consist from logs. Other materials e.g. poles, tubes, bars etc. may be received either. The invention, though, is not supposed to be limited to be used with elongated material 19 but may be applied in combination with differently shaped pieces or goods as well as bulk material(s), too.

Close to the load space 18 there is provided a boom 20 which is movably supported by the chassis 12. In particular the boom 20 may be tilted as well as swiveled with respect to the load space 18 and is equipped with telescopic means 22 to vary boom length.

At the end of the boom 20 there is attached a material manipulating device 24 in form of a grappel by means of a suspension 26 or rotator, e.g. allowing swiveling and/or tilting of the material manipulating device 24.The material manipulating device 24 comprises a main part 28 supporting two tongs 30 movable to selectively grab material 19.

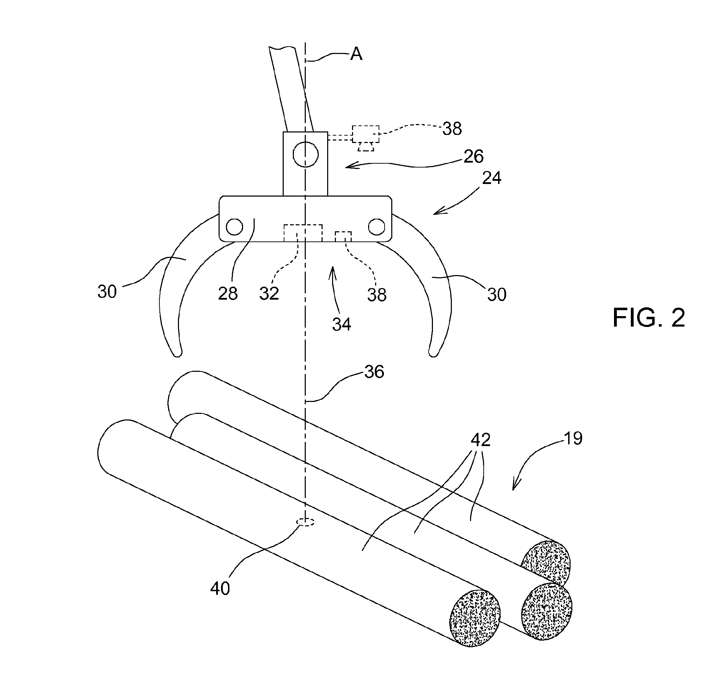

It is now taken reference, in addition, to figure 2 showing the material manipulating device 24 with the suspension 26, the main part 28 and the tongs 30 movably supported by the main part 28 in more detail. In addition the material manipulating device 24 is provided with a guide means 32 located in a central area 34 of the main part 28 of the material manipulating device 24.

According to the shown embodiment the guide means 32 is formed by a laser pointer emitting a focused laser beam 36 providing an extension or elongation of a central or main axis A of the material manipulating device 24. Other embodiments may be a source of light, ultrasonic waves or other radiation. It is even possible to consider using a plumbline.

According to a simple and cost-effective embodiment the guide means 32 in the form of a laser beam or other visible indication means may be directly visible to an operator while manipulating the material 19. However it may be provided one or more receiver means 38 (two possible locations indicated in broken lines) to receive the indication 40 provided by means of the guide means 32 and either displaying it for example by means of a monitor (not shown) to an operator or feed it back to a control means (not shown) which either may provide information to an operator or allow automatic control material manipulation for example by use of a electronic control unit (not shown). The receiver means 38 may by among others a camera, an ultrasonic receiver or any other receiving means adapted to either display or process the indication or information provided by the guide means 32. The guide means 32 as well as the receiver means 38 and/or the display means (not shown) may be turned on all the time or may be selectively activated if required.

In the following a mode of operation for the material manipulating device 24 and/or a work vehicle 10 equipped with such material manipulating device 24 will be briefly described.

The work vehicle 10 is driven closely to, for example, a stake or pile of material 19 to be handled. If applicable, at least the guide means 32 is activated. In case some kind of plumbline is used, activation might not be necessary. It is possible though that the plumbline is released from a storage area or the like where it is stored and/or may be retracted during non-use or in between single uses.

When activated, the guide means 32 according to the present embodiment emits a laser beam which produces a visible indication 40 where it hits the ground or the material 19 to be handled respectively. The indication 40 forms a visible elongation of the main axis A of the material manipulating device 24 and shows or indicates the position of the material manipulating device 24 over the ground or the material 19 that way providing the operator with information about the location of the material manipulating device 24 with respect to the ground or the material 19 to be manipulated.

If there is not provided any additional device or control such laser beam helps the operator to place the material manipulating device 24 in the appropriate position for manipulation or more specifically for grabbing, grappeling and/or lifting. In case of elongated material to be manipulated it is in particular difficult for an operator to decide where to place the material manipulating device 24 with respect to the radial as well as the axial extension of the material 19, e.g. a log 42. The indication 40 provided by the guide means 32 helps with this evaluation and assist in aligning respectively positioning the material handling device 24 on top of the material 19 in general and/or in a suitable position for handling, for example with respect to the center of gravity of the material 19 to be handled.

If a receiver means 38 is provided it can provide additional information to the operator, e.g. by means of a camera an enhanced visibility may be provided or there may be provided information like coordinates. By means of other types of receiver means 38, e.g. ultrasonic receivers or other sensor devices information on the exact position, distance, coordinates, speed etc. may be provided. Such information may be displayed or otherwise provided to the operator to assist in (semi-)manual manipulation or control element activation or may be used to semi or fully automatic material manipulation or handling.

Having described the preferred embodiment, it will become apparent that various modifications can be made without departing from the scope of the invention as defined in the accompanying claims.

## Claims

1. A material manipulating device (24), preferably a grapple, supported by a suspension (26), **characterized in that** the material manipulating device (24) is provided with at least one guide means (32) adapted to indicate the location of the material manipulating device (24) at least with respect to the material (19) to be manipulated.

2. The material manipulating device (24) according to claim 1, **characterized in that** the guide means (32) provides a direct and/or an indirect indication (40).

3. The material manipulating device (24) according to claim 1 or 2, **characterized by** at least one out of a light emitting device, preferably a laser pointer, an ultrasonic device or a plumbline.

4. The material manipulating device (24) according to one of the previous claims, **characterized in** the guide means (32) is located in a central area (34) of the material manipulating device and preferably forms an elongation of a main axis (A) of the material manipulating device (24).

5. The material manipulating device (24) according to one of the previous claims, **characterized by** a receiver means (38) adapted to receive the indication (40) provided by the guide means (32) and preferably comprising at least one out of a camera, light detector or ultrasonic receiver.

6. The material manipulating device (24) according to one of the previous claims, **characterized in that** the guide means (32) and/or receiver means (38) is/are selectively activatable.

7. The material manipulating device (24) according to one of the previous claims, **characterized by**:
a) guide means (32) designed to emit a beam of a special shape or to emit at least two parallel beams,
b) a receiver means (38) and
c) a controller means to identify the rotational direction (orientation) of the material handling device (24) based on the signals emitted and received.

8. A work vehicle (10), preferably a forwarder, **characterized by** at least one material manipulating device (24) according to one of the previous claims.

9. The work vehicle according to claim 8, **characterized by** control means operatively connected to the guide means (32) and/or the receiver means (38), whereas the control means preferably controls and/or provides information to control movement of the material manipulating device (24).

10. The work vehicle (10) according to claim 8 or 9, **characterized by** display means adapted to visualize material manipulating device location information provided by the receiver means (38) and/or control means to an electronic control unit and/or an operator.

11. A method to manipulate material (19) by means of a material manipulating device (24) according to one of the claims 1 to 5 or a work vehicle (10) according to the claims 8 to 10 respectively, **characterized by** the steps of activating the at least one guide means (32) if applicable, moving the material manipulating device (24) towards the material (19) to be manipulated, appropriately aligning the material manipulating device (24) with respect to the material (19) according to the indication (40) provided by the guide means (24) and manipulating the material (19) respectively.

12. The method according to claim 11, **characterized in that** material manipulating device alignment is handled manually by an operator, semi-manually according to information provided by the control means or semi or fully automated by means of the control means or electronic control unit.
